# EUROPEAN PATENT SPECIFICATION

(11) **EP 2 330 001 B1**
(45) Date of publication and mention of the grant of the patent: **08.02.2012**
(21) Application number: 10190594.1
(22) Date of filing: 10.11.2010
(51) Int. Cl.: B60R 25/04

(54) **Slot device for immobilizer authentication system**
Schlitzvorrichtung für ein Wegfahrsicherungsauthentifizierungssystem
Dispositif à rainure pour système d'authentification d'immobilisation

(30) Priority: 02.12.2009 JP 2009274602
(43) Date of publication of application: 08.06.2011
(73) Proprietor: Alps Electric Co., Ltd., Tokyo 145-8501 (JP)
(72) Inventor: Takata, Tomosuke, Tokyo Tokyo 145-8501 (JP); Kawakami, Shinji, Tokyo Tokyo 145-8501 (JP)
(74) Representative: Klunker . Schmitt-Nilson . Hirsch

(56) References cited:
- EP-A2- 1 418 532
- WO-A1-01/14179
- DE-C1- 4 038 038
- US-B1- 6 260 651

## Description

### Cross Reference to Related Application

The present invention contains subject matter related to Japanese Patent Application JP 2009-274602 filed in the Japanese Patent Office on December 2, 2009, the entire contents of which being incorporated herein by reference.

### BACKGROUND

### 1. Technical Field

The present invention relates to a slot device for an immobilizer authentication system which enables authentication for a mobile unit (an electronic key) on the basis of a transponder signal by loading the mobile unit when a battery becomes exhausted or the like. Such a slot device is known from EP 1418532 A according to the preamble of claim 1.

### 2. Related Art

Recently, in many automobiles, an immobilizer authentication system is employed which performs wireless communication between a vehicle body and a mobile unit (an electronic key) carried by a user and permits the starting of an engine only when an ID code for the mobile unit coincides with a previously registered ID code. In such an immobilizer authentication system, according to a request signal transmitted from a control device on a vehicle side, an answer signal is transmitted from the mobile unit having a battery embedded therein and a complex encryption ID code included in the answer signal is verified by the control device, so that authentication for the mobile unit can be performed and thus an excellent effect can be expected in preventing vehicle theft.

However, since the mobile unit is unable to transmit an answer signal if a battery embedded therein becomes exhausted, in general, in an immobilizer authentication system of an automotive, a slot device into which a mobile unit can be loaded is mounted on a vehicle side (for example, an instrument panel) so that an ID code for the mobile unit can be verified even when the battery is exhausted. That is, when a mobile unit is inserted into a slot device of this kind and pressed into a predetermined position, a detection switch provided in the slot device is turned on so that a control device on a vehicle side makes the mobile unit generate a transponder signal by electromagnetic induction. Accordingly, the control device verifies an ID code included in the transponder signal so that authentication for the mobile unit can be performed without exhausting the embedded battery in the mobile unit loaded into the slot device.

However, since there is a possibility that foreign matter (for example, a finger or a rod-shaped object or the like) other than the mobile unit is inserted into the slot device of this kind, it is necessary to take advance steps such that the immobilizer authentication system is not adversely affected even when the detection switch is turned on by insertion of such foreign matter. Consequently, in a related art, there has been proposed a slot device which can automatically return the detection switch to a turned-off state rapidly even when the detection switch is turned on by insertion of the foreign matter other than the mobile unit (for example, refer to Japanese Unexamined Patent Application Publication No. 2004-162261).

In such a slot device of related art, as the mobile unit (electronic key) is inserted, a holder member is pressed via a shutter member to move in a sliding manner in an inserting direction of the mobile unit, and when the mobile unit is inserted to a predetermined position, the mobile unit is held (locked) in the holder member. Next, if the mobile unit is further inserted, the detection switch (verification switch) is driven by the holder member to be turned on, and the holder member is locked into a recess of a case by the action of a link mechanism attached to the shutter member and the holder member, the shutter member is in a state of being sandwiched between the holder member and the mobile unit. Even if the detection switch is turned on due to the shutter member and the holder member being pressed by the insertion of the foreign matter other than the mobile unit, if the foreign matter is removed, the shutter member returns to its initial position by being pressed by a first return spring, so that along with the returning motion of the shutter member, the link mechanism makes the holder member disengage from the recess of the case. As a result, the holder member returns to its initial position by being pressed by a second return spring and the detection switch also returns to a turned-off state.

### SUMMARY

However, in the slot device of related art disclosed in Japanese Unexamined Patent Application Publication No. 2004-162261, there is a problem that since the shutter member and the holder member are connected via a complex link mechanism and thus the number of parts also becomes large, it is difficult to achieve size reduction and cost reduction. In addition, in such a slot device of related art, there is also a problem that the detection switch is necessarily turned on every time when the foreign matter other than the mobile unit is inserted. That is, since assuming that the mobile unit loaded into the slot device has exhausted its embedded battery and thus cannot reply with an answer signal, a general immobilizer authentication system is designed such that it does not transmit a request signal so as to avoid useless exhaustion of the battery on a vehicle side when the detection switch is turned on. In such a case, if the detection switch is simply turned on when the foreign matter other than the mobile unit is inserted into the slot device, while the foreign matter is inserted, the request signal is not transmitted and thus an authentication for the mobile unit is not performed.

An advantage of some aspects of the present invention is to provide a slot device for an immobilizer authentication system which is simple in construction, whereby size reduction and cost reduction can be easily achieved, and in which the detection switch is not simply turned on even if the foreign matter other than the mobile unit is inserted.

According to an embodiment of the present invention, there is provided a slot device for an immobilizer authentication system, including: a movable holder which has a storage portion into which a mobile unit having a wireless communication function can be removably inserted and is able to move in a sliding manner in the inserting direction of the mobile unit; a return spring for returning the movable holder to an initial position; a detection switch for performing an authentication operation to make the mobile unit generate a transponder signal by electromagnetic induction; and a lock mechanism capable of gripping the movable holder at a predetermined sliding position; and by pressing the mobile unit inserted into the storage portion and held by the movable holder in the inserting direction against a pressing force of the return spring, the movable holder moves in a sliding manner in the same direction, and at a point in time when the mobile unit is pressed to a predetermined position, the detection switch is turned on so that the authentication operation can be performed on the basis of the transponder signal, wherein the slot device includes an operating slider having a portion to be pressed which is disposed at a part of an inside of the storage portion and an operating portion which extends from the portion to be pressed and protrudes to the outside of the movable holder; and wherein, the operating slider can move relative to the movable holder in a direction to increase or decrease an amount of protruding in the operating portion, and the operating portion makes the detection switch turn on by making the portion to be pressed be pressed by the mobile unit.

In the slot device configured as described above, when foreign matter other than the mobile unit is inserted into the storage portion of the movable holder, even if the foreign matter presses the movable holder at a place where the portion to be pressed of the operating slider is not present, the detection switch is not turned on. For this reason, by arranging the portion to be pressed at an appropriate place inside of the storage portion (for example, at one corner portion of a deep inside section of the storage portion), when the mobile unit is inserted, the portion to be pressed is necessarily pressed whereas when the foreign matter other than the mobile unit is inserted, a configuration can be easily realized in which it is difficult to press the portion to be pressed is difficult to be pressed, so that even if the foreign matter other than the mobile unit is inserted, the detection switch is not simply turned on. Furthermore, even if the foreign matter other than the mobile unit presses the portion to be pressed and thus turns on the detection switch, the operating slider is not locked, so that if the foreign matter is removed, the detection switch automatically returns to a turned-off state rapidly. Moreover, since a special link mechanism is not required between the operating slider and the movable holder, a structure of the slot device is simple and it is easy to achieve size reduction and cost reduction.

In the configuration as described above, if the operating slider can move in an inserting direction of the mobile unit relative to the movable holder, it is possible to arrange the operating slider in a deep section of the movable holder without trouble and, thus, it is easier to achieve size reduction of the entire device. However, in a case in which a space for the operating portion to protrude can be easily secured, a configuration may be employed in which the operating slider can move in a different direction relative to the movable holder.

Furthermore, in the configuration as described above, the operating slider may be supported by a member other than the movable holder. However, if the operating slider is movably supported by the movable holder, a supporting structure of the operating slider can be preferably simplified. In this case, if the operating slider is elastically supported by the movable holder via a spring member, it is possible to automatically return the operating slider to an initial position by the spring member and to prevent rattling of the operating slider, so that it is possible to stabilize the operation of the operating slider without making the structure complex.

In the slot device for the immobilizer authentication system of the present invention, the operating slider is able to move relative to the movable holder which can hold the mobile unit and can be locked at a predetermined sliding position, wherein the detection switch is turned on by the change of a position of the operating slider. Accordingly, when the foreign matter other than the mobile unit is inserted into the storage portion of the movable holder, even if the foreign matter presses the portion to be pressed of the operating slider and thus turns on the detection switch, the operating slider is not locked, so that if the foreign matter is removed, the detection switch automatically returns to a turned-off state rapidly. Furthermore, even if the foreign matter other than the mobile unit presses the movable holder at a place where the portion to be pressed is not present, the detection switch is not turned on, so that by arranging the portion to be pressed at an appropriate place inside of the storage portion, when the mobile unit is inserted, the portion to be pressed is necessarily pressed whereas when the foreign matter is inserted, a configuration can be easily realized in which it is difficult to press the portion to be pressed, whereby even if the foreign matter other than the mobile unit is inserted, the detection switch is not simply turned on. Moreover, since a special link mechanism is not required between the operating slider and the movable holder, a structure of the slot device is simple and it is easy to achieve size reduction and cost reduction.

### BRIEF DESCRIPTION OF THE DRAWINGS

Fig. 1 is an external view showing an immobilizer authentication system according to an embodiment of the present invention with a case thereof being removed.
Fig. 2 is an exploded perspective view showing a state in which an operating slider is separated from a movable holder of Fig. 1.
Fig. 3 is an explanatory view showing a state in which insertion of a mobile unit into the slot device has been started.
Fig. 4 is a longitudinal sectional view corresponding to Fig. 3.
Fig. 5 is an explanatory view showing a state in which the mobile unit has been inserted to a position where it is held in the movable holder of the slot device.
Fig. 6 is a longitudinal sectional view corresponding to Fig. 5.
Fig. 7 is an explanatory view showing a state in which the mobile unit has been inserted to a position where the detection switch of the slot device is turned on.
Fig. 8 is a longitudinal sectional view corresponding to Fig. 7.

### DESCRIPTION OF EXEMPLARY EMBODIMENTS

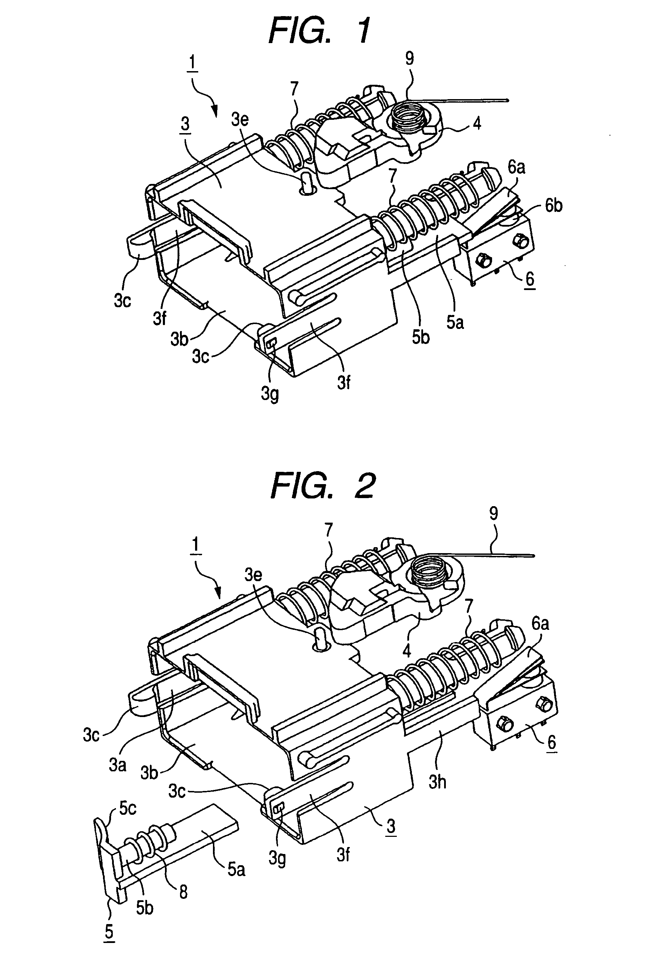

Hereinafter, an immobilizer authentication system according to an embodiment of the present invention will be described with reference to Fig. 1 to Fig. 8.

A slot device 1 shown in these figures is arranged on an instrument panel or the like of a vehicle, and a mobile unit (electronic key) 10 carried by a user is loaded into the slot device so that authentication for the mobile unit 10 is performed. That is, in the immobilizer authentication system of an automobile, according to a request signal transmitted from a control device on a vehicle side, an answer signal is transmitted from the mobile unit 10 having a battery embedded therein and an ID code included in the answer signal is verified by the control device so that authentication for the mobile unit 10 can be performed. However, in order to make it possible to verify the ID code of the mobile unit 10 even when the battery is exhausted, a slot device 1 into which the mobile unit 10 can be loaded is provided on a vehicle side.

The slot device 1 is mainly composed of a case 2 which is a stationary member, a movable holder 3 which is attached to the case 2 to be able to move in a sliding manner in a direction of arrow A, a heart cam body 4 which locks (grips) the movable holder 3 at a predetermined slide position, an operating slider 5 which is assembled at one corner portion of a deep section of the movable holder 3 to be able to move in a sliding manner in a direction of arrow A, a detection switch 6 which is turned on by the operating slider 5, and a pair of first coil springs 7 which is in elastic contact with a spring receiving portion (not shown) of the case 2 and elastically presses the movable holder 3 in a direction opposite to the arrow A, and the operating slider 5 is elastically supported onto the movable holder 3 via second coil spring 8.

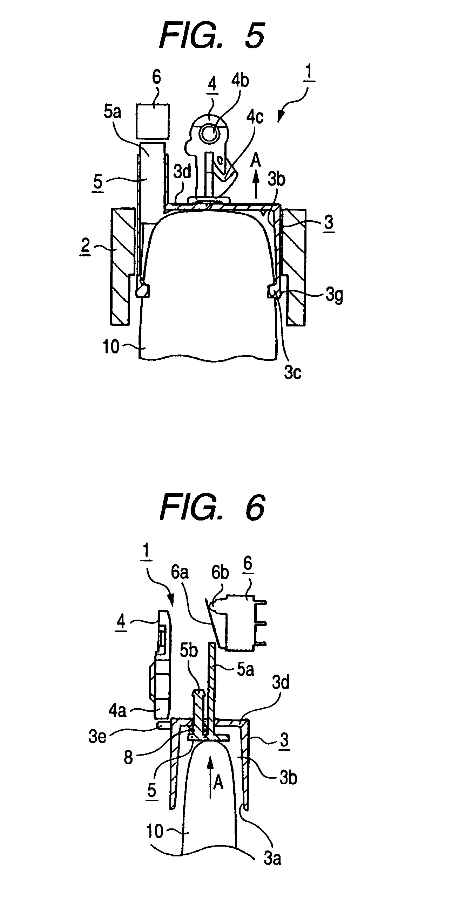

The movable holder 3 is provided with a storage portion 3b into which the mobile unit 10 is removably inserted via a rectangular inserting port 3a, a pair of locking claws 3c capable of fitting into a recess 10a formed at both sides of the mobile unit 10, a deep wall 3d having a hole for inserting the operating portion 5a and the columnar portion 5b of the operating slider 5, and an engaging pin 3e which is engaged with a cam surface 4a of the heart cam body 4. A width dimension of the storage portion 3b is substantially equal to a width dimension of the mobile unit 10. As shown in Fig. 5, if the mobile unit 10 is inserted into the storage portion 3b in the vicinity of the deep wall 3d, a pair of locking claws 3c is fitted into a pair of recesses 10a, so that the mobile unit 10 is in a state of being locked (held) in the movable holder 3. The locking claw 3c is formed at a tip (free end) part of an elastic piece 3f and a back side of the locking claw 3c is provided with a protrusion 3g. Since the mobile unit 10 is adapted to spread the pair of locking claws 3c so that the mobile unit 10 is inserted into the storage portion 3b, at a point in time when the mobile unit 10 is inserted to a predetermined amount, the locking claws 3c are adapted to snap into the recesses 10a.

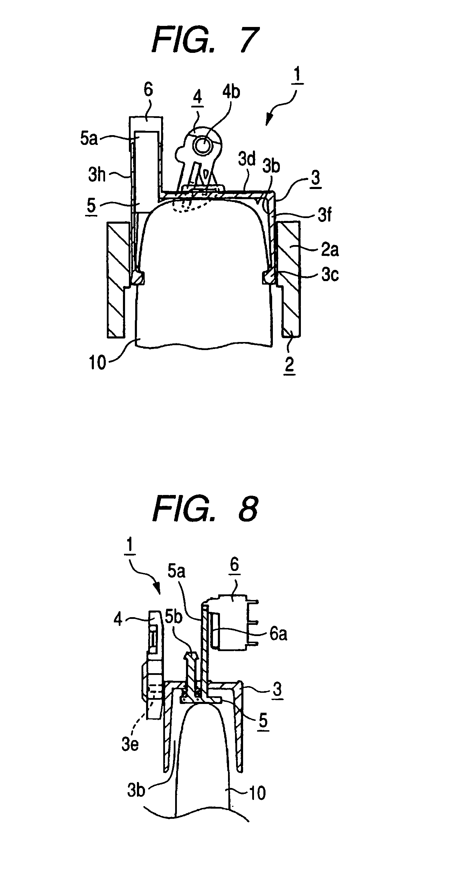

Furthermore, when the mobile unit 10 locked in the movable holder 3 in this way is further pressed in a direction of insertion (direction of arrow A), the engaging pin 3e makes a linear sliding movement in the same direction, wherein since the engaging pin 3e moves along the cam surface 4a, the heart cam body 4 starts to rotate in a clockwise direction of Fig. 5 about a rotating shaft 4b. Next, when the mobile unit 10 makes the movable holder 3 move in a sliding manner in a direction of arrow A by a predetermined amount, the engaging pin 3e enters a lock portion 4c of the cam surface 4a, so that, as shown in Fig. 7, the movable holder 3 is locked by the heart cam body 4. In addition, as shown in Figs. 1 and 2, the heart cam body 4 has a twisted coil spring 9 supported by the rotating shaft 4b, and the engaging pin 3e is adapted to be in elastic contact with the cam surface 4a against a pressing force of the twisted coil spring 9. In addition, a detailed configuration of the cam surface 4a of the heart cam body 4 is a push lock mechanism made of a so-called heart cam mechanism known in the past in an application for a connector for a push lock switch or a card or the like, and a detailed description thereof will be omitted. Furthermore, a pair of first coil spring 7 as described above is elastically compressed as the movable holder 3 moves in a sliding manner in a direction of arrow A.

The operating slider 5 is provided with a portion to be pressed 5c which is typically arranged in the storage portion 3b and capable of coming into contact with the mobile unit 10, and an operating portion 5a and a columnar portion 5b which extend from the portion to be pressed 5c in a direction of arrow A. The operating portion 5a passes through the deep wall 3d to protrude out of the movable holder 3, and the operating slider 5 is capable of moving in a direction of increasing or reducing a protruding amount of the operating portion 5a (in a direction of arrow A) relative to the movable holder 3. When the mobile unit 10 presses the portion to be pressed 5c so as to make the operating slider 5 slidinly move to a predetermined position in a direction of arrow A, a tip part of the operating portion 5a drives an actuator 6a to make the detection switch 6 turn on. Although the columnar portion 5b also passes through the deep wall 3d, the second coil spring 8 inserted outside of the columnar portion 5b is typically inside of the storage portion 3b, and a retaining portion 5d provided at a tip part of the columnar portion 5b is typically outside of the storage portion 3b. In addition, although the retaining portion 5d is formed by use of a mold such as a slide core, it is also possible to form the retaining portion 5d by the use of another member such as a washer.

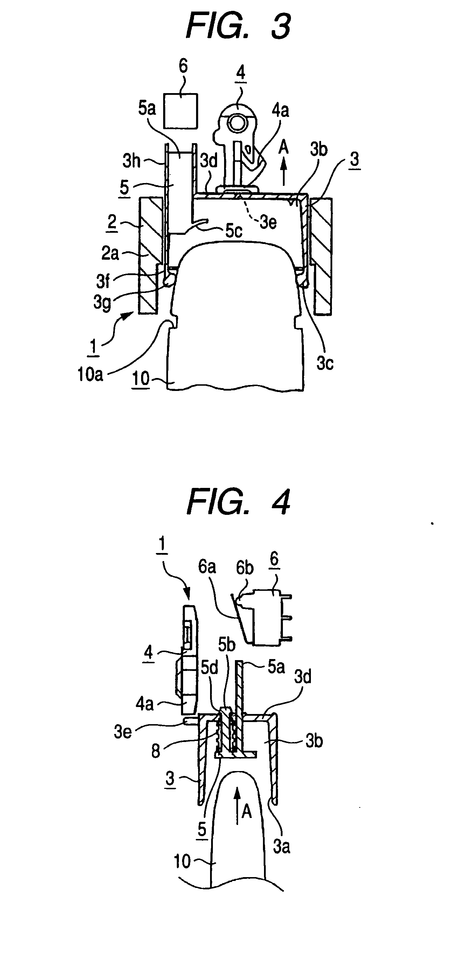

As shown in Fig. 4, since the second coil spring 8 is in elastic contact with the deep wall 3d inside the storage portion 3b, even at a time of non-insertion or the like when the mobile unit 10 does not press the portion to be pressed 5c, the operating slider 5 is retained in the movable holder 3 without rattling due to a pressing force of the second coil spring 8. The second coil spring 8 is elastically compressed as the operating slider 5 is pressed to move in a sliding manner in a direction of arrow A relative to the movable holder 3. In addition, although the portion to be pressed 5c of the operating slider 5 is disposed at one corner portion of a deep inside section of the storage portion 3b, as shown in Fig. 5, the mobile unit 10 deeply inserted into the storage portion 3b is adapted to necessarily come in contact with the portion to be pressed 5c. Furthermore, a pair of guide portions 3h which extends to clamp the operating portion 5a in the movable holder 3 is provided so as to protrude, and the operating portion 5a is adapted to move in a sliding manner while being guided by a guide portion 3h, so that the operating slider 5 is able to move in a sliding manner smoothly without tilting relative to the movable holder 3.

The detecting switch 6 is a push switch configured to be turned on by the actuator 6a which is driven by the operating portion 5a of the operating slider 5 to push a stem 6b. When the mobile unit 10 inserted into the storage portion 3b presses the operating slider 5 to a predetermined position and thus an on-signal is output from the detection switch 6, a control device (not shown) of the immobilizer authentication system performs an authentication operation of the mobile unit 10 without transmitting a request signal. That is, the control device makes the mobile unit 10 generate a transponder signal by electromagnetic induction and verifies an ID code included in the transponder signal, so that authentication for the mobile unit 10 is enabled without exhausting the battery embedded in the mobile unit 10.

Next, operation of the slot device 1 configured as described above will be explained in detail. If the mobile unit 10 is inserted into the inserting port 3a of the operating slider 5 when the battery is exhausted or the like, as shown in Figs. 3 and 4, a tip part of the mobile unit 10 is inserted into the storage portion 3b while spreading the pair of locking claws 3c. However, until the mobile unit 10 comes into contact with the portion to be pressed 5c, there is no change of position in the operating slider 5.

When the mobile unit 10 is further inserted into the storage portion 3b, one side portion of tip of the mobile unit 10 (upper end left corner portion in Fig. 3) comes into contact with the portion to be pressed 5c, so that the operating slider 5 moves in a sliding manner in a direction of arrow A (an inserting direction of the mobile unit 10) by being pressed by the mobile unit 10. As the operating slider 5 moves in a sliding manner, the second coil spring 8 is elastically compressed and the operating portion 5a comes closer to the actuator 6a of the detection switch 6. In addition, a spring pressure of the first coil spring 7 is sufficiently higher than that of the second coil spring 8, and in this operation, the operating slider 5 is not moved by the first coil spring 7. When an insertion amount of the mobile unit 10 comes to a state of Figs. 5 and 6, the locking claws 3c are fitted into the recesses 10a, so that the mobile unit 10 is in a state of being locked (held) in the movable holder 3. After that, the mobile unit 10 is further pressed, the mobile unit 10 comes in contact with the deep wall 3d of the movable holder 3 and thereby presses it, so that the movable holder 3 starts to move in a sliding manner. At this time, for example, by increasing the width dimension of the portion to be pressed 5c in a direction of arrow A, the mobile unit 10 may press the deep wall 3d via the portion to be pressed 5c.

That is, when the mobile unit 10 is further pressed in a direction of arrow A from a state shown in Figs. 5 and 6, the movable holder 3 and the operating slider 5 move in a sliding manner in the same direction integrally with the mobile unit 10 so that a pair of first coil springs 7 (refer to Fig. 1) are elastically compressed, and the engaging pin 3e rotates the heart cam body 4 in a clockwise direction of Fig. 5 and the operating portion 5a gradually drives the actuator 6a. Then, when the mobile unit 10 presses the movable holder 3 and the operating slider 5 to a state shown in Figs. 7 and 8, the operating portion 5a presses the stem 6b via the actuator 6a to turn on the detection switch 6, and immediately after the detection switch 6 is turned on, the movable holder 3 enters the lock portion 4c of the heart cam body 4 to be locked (gripped) therein. Furthermore, since the movable holder 3 moves in a sliding manner to a position at which the protrusion 3g of the elastic piece 3f faces a thick portion 2a of the case 2, the locking claw 3c is restrained by the thick portion 2a and thus becomes unable to disengage from the recesses 10a. Accordingly, the mobile unit 10 comes to a state in which it is loaded in the slot device 1 without the fear of falling therefrom, and the detection switch 6 is kept in a turned-on state. As described above, when an on-signal is output from the detection switch 6, the control device of the immobilizer authentication system makes the mobile unit 10 generate a transponder signal by electromagnetic induction and verifies an ID code included in the transponder signal to perform authentication for the mobile unit 10, so that if the authentication is valid, starting of a vehicle engine is approved. Furthermore, when a detection switch is turned on, the control device is designed so as to not transmit a request signal so as to avoid exhaustion of the battery of the vehicle.

In addition, when releasing the mobile unit 10 loaded as above from the slot device 1, first, the mobile unit 10 locked in the heart cam body 4 is pressed one step deeper to disengage the engaging pin 3e from the lock portion 4c. Accordingly, the movable holder 3 gripped in the heart cam body 4 is unlocked, so that the movable holder 3 and the operating slider 5 move in a sliding manner toward the inserting port 3a (in a direction opposite to arrow A) due to a reaction force of the first coil spring 7 to return to a state shown in Figs. 5 and 6. In this process, the detection switch 6 returns to a turned-off state, and the heart cam body 4 rotates in a counterclockwise direction of Fig. 7 as the engaging pin 3e moves along the cam surface 4a. In a state shown in Figs. 5 and 6, when a user strongly pulls the mobile unit 10 closely, the locking claws 3c are disengaged from the recesses 10a of the mobile unit 10 by deflection of the elastic pieces 3f, so that it is possible to remove the mobile unit 10 from the slot device 1. Furthermore, if the mobile unit 10 is removed, the operating slider 5 moves in a sliding manner toward the inserting port 3a due to the reaction force of the second coil spring 8 and thus returns to a state shown in Figs. 3 and 4.

Next, a case in which foreign matter other than the mobile unit 10 is inserted into the storage portion 3b from the inserting port 3a will be explained. Since the portion to be pressed 5c of the operating slider 5 is disposed at one corner portion of a deep inside section of the storage portion 3b, even if an elongated foreign matter such as a finger or a rod-shaped object is inserted into the storage portion 3b, a possibility that the portion to be pressed 5c is pressed by that foreign matter is low. Instead, a possibility that such foreign matter presses the deep wall 3d is high. In this case, the movable holder 3 moves in a sliding manner in a direction of arrow A to be locked in the heart cam body 4 whereas the detection switch 6 is not turned on, so that the control device of the immobilizer authentication system does not stop the transmission of a request signal. In addition, even if the movable holder 3 is locked in the heart cam body 4 in this way, after that, if the mobile unit 10 is deeply inserted into the storage portion 3b, it is able to be unlocked, so that there is no problem.

Furthermore, when the portion to be pressed 5c is pressed by insertion of the foreign matter other than the mobile unit 10, even if the operating slider 5 moves in a sliding manner in a direction of arrow A and thus the detection switch 6 is turned on, the operating slider 5 is not locked, so that when such foreign matter is removed, the operating slider 5 is pressed by the second coil spring 8 to return to its original position, whereby the detection switch 6 rapidly returns to a turned-off state. In other words, the slot device 1 is configured such that it is possible to keep the detection switch 6 in a turned-on state only in a case in which an object inserted into the storage portion 3b presses the movable holder 3 and the operating slider 5 together to make them move in a sliding manner.

As described above, in the slot device 1 for the immobilizer authentication system according to the present embodiment, although the portion to be pressed 5c of the operating slider 5 is necessarily pressed when the mobile unit 10 is inserted into the storage portion 3b, there is a high possibility that, when foreign matter other than the mobile unit 10 is inserted into the storage portion 3b, the movable holder 3 is pressed into a place where the portion to be pressed 5c is not present, wherein in this case, the detection switch 6 is not turned on. In other words, the slot device 1 is structured such that even if the foreign matter other than the mobile unit 10 is inserted, the detection switch 6 is not simply turned on. Furthermore, even if the foreign matter other than the mobile unit 10 presses the portion to be pressed 5c and turns on the detection switch 6, the operating slider 5 is not locked, so that when the foreign matter is removed, the detection switch 6 automatically returns to a turned-off state rapidly. In other words, since the slot device 1 has a configuration in which an undesired stopping of a request signal to occur due to the insertion of foreign matter does not easily occur so that the usual authentication can be performed without trouble, and also, if the mobile unit 10 is inserted when the battery is exhausted, the authentication can be reliably performed, it becomes a slot device which is easy to use and highly practical.

Furthermore, in the slot device 1 according to this embodiment, since a special link mechanism is not required between the operating slider 5 and the movable holder 3, a structure of the slot device is simple and it is easy to achieve size reduction and cost reduction. In addition, although the portion to be pressed 5c of the operating slider 5 is disposed at one corner portion of a deep inside section of the storage portion 3b in the embodiment as described above, if the portion to be pressed 5c is disposed at an appropriate place where it is difficult to be pressed even if the foreign matter such as a finger or a rod-shaped object is inserted into the storage portion 3b, the same effect as in the above embodiment is obtained.

Furthermore, in the slot device 1 according to this embodiment, the operating slider 5 is moveably supported by the movable holder 3, so that a supporting structure of the operating slider 5 is extremely simple. Moreover, since the operating slider 5 is elastically supported by the movable holder 3 via the second coil spring 8, it is possible to automatically return the operating slider 5 to its initial position due to the second coil spring 8 and to prevent rattling of the operating slider 5. For that reason, the slot device 1 has a simple construction and operation of the operating slider 5 is stable. In addition, although the second coil spring 8 is arranged in the inside of the storage portion 3b in the slot device 1 according to this embodiment, the second coil spring 8 may be arranged between the retaining portion 5d outside of the storage portion 3b and the deep wall 3d of the movable holder 3. However, in this case, when a spring pressure of the second coil spring 8 is set to be sufficiently smaller than the operating force of the detection switch 6 and the movable holder 3 is pressed by insertion of the foreign matter other than the mobile unit 10, it is necessary for the second coil spring 8 to be elastically compressed to move the movable holder 3 only so that the operating portion 5a of the operating slider 5 does not press the detection switch 6. Additionally, the second coil spring 8 may be omitted. Furthermore, it is also possible to support the operating slider 5 by a member other than the movable holder 3. For example, a structure may be employed in which the operating slider 5 is supported by the guide portion or the like formed on the case 2, or a structure may be employed in which an operation shaft (actuator) of the detection switch 6 configured as a push switch extends to an inside of the storage portion 3b and the operating slider is formed at the extended part.

Furthermore, in the slot device 1 according to this embodiment, since the operating slider 5 can move in an inserting direction of the mobile unit 10 (a direction of arrow A) relative to the movable holder 3, it is possible to arrange the operating slider 5 in a deep section of the movable holder 3 without trouble and, also from this point, it is easy to achieve size reduction of the entire device. However, in a case in which a space for the operating portion 5a to protrude can be easily secured, a configuration may be employed in which the operating slider 5 can move in a different direction relative to the movable holder 3. For example, if the operating slider capable of passing through the hole provided at one side wall of the movable holder 3 and moving in a direction perpendicular to the inserting direction of the mobile unit 10 is provided with a sloping surface capable of sliding with the mobile unit 10, it is possible to turn on the detection switch by the operating portion of the operating slider protruding toward a lateral side of the movable holder 3 when inserting the mobile unit 10.

In addition, although the above embodiment is configured such that the operating portion 5a of the operating slider 5 presses the stem 6b via the actuator 6a to turn on the detection switch 6, the operating portion 5a may directly press the stem 6b of the detection switch 6. Furthermore, as a detection switch, a non-contact type switch such as an optical sensor or a magnetic sensor may be used.

Furthermore, in the above embodiment, as a lock mechanism capable of gripping the movable holder 3 at a predetermined position, a lock mechanism of a heart cam structure (a heart cam body 4) is employed. However, a lock mechanism of another cam structure, a solenoid or the like may be used.

## Claims

1. A slot device (1) for an immobilizer authentication system, comprising: a movable holder (3) which has a storage portion (3b) into which a mobile unit (10) having a wireless communication function can be removably inserted and is able to move in a sliding manner in the inserting direction of the mobile unit; a return spring for returning the movable holder to an initial position; a detection switch (6) for performing an authentication operation to make the mobile unit (10) generate a transponder signal by electromagnetic induction; and a lock mechanism capable of gripping the movable holder (3) at a predetermined sliding position; and by pressing the mobile unit (10) inserted into the storage portion (3b) and held by the movable holder (3) in the inserting direction against a pressing force of the return spring, the movable holder (3) moves in a sliding manner in the same direction and, at a point in time when the mobile unit (10) is pressed to a predetermined position, the detection switch (6) is turned on so that the authentication operation can be performed on the basis of the transponder signal, **characterised in that**
the slot device (1) comprises an operating slider (5) having a portion to be pressed (5c) which is disposed at a part inside of the storage portion (3b) and an operating portion (5a) which extends from the portion to be pressed (5c) and protrudes to outside of the movable holder (3); and
wherein the operating slider (5) can move relative to the movable holder (3) in a direction to increase or decrease an amount of protruding in the operating portion (5a), and the operating portion (5a) makes the detection switch (6) turn on by making the portion to be pressed (5c) be pressed by the mobile unit (10).

2. The slot device (1) according to claim 1, wherein the operating slider (5) is able to move relative to the movable holder (3) in the inserting direction of the mobile unit (10).

3. The slot device (1) according to claim 1 or 2, wherein the operating slider (5) is movably supported by the movable holder (3).

4. The slot device according to claim 3, wherein the operating slider (5) is elastically supported by the movable holder (3) via the spring member.

## Patentansprüche

1. Schlitzvorrichtung (1) für ein Wegfahrsperren-Authentifizierungssystem, aufweisend: einen beweglichen Halter (3) mit einem Aufnahmebereich (3b), in den eine mobile Einheit (10) mit einer drahtlosen Kommunikationsfunktion lösbar eingesetzt werden kann und der sich in der Einsetzrichtung der mobilen Einheit verschieben lässt; eine Rückführfeder zum Zurückführen des beweglichen Halters in eine Ausgangsposition; einen Detektionsschalter (6) zum Ausführen eines Authentifizierungsvorgangs, um die mobile Einheit (10) durch elektromagnetische Induktion zum Erzeugen eines Transpondersignals zu veranlassen; und einen Verriegelungsmechanismus, der an dem beweglichen Halter (3) in einer vorbestimmten Verschiebeposition angreifen kann; wobei durch Druckbeaufschlagung der mobilen Einheit (10), die in den Aufnahmebereich (3b) eingesetzt ist und durch den beweglichen Halter (3) in der Einsetzrichtung entgegen einer Drückkraft der Rückführfeder gehalten ist, der bewegliche Halter (3) in der gleichen Richtung verschoben wird und zu einem Zeitpunkt, zu dem die mobile Einheit (10) in eine vorbestimmte Position gedrückt ist, der Detektionsschalter (6) eingeschaltet wird, so dass der Authentifizierungsvorgang auf der Basis des Transpondersignals ausgeführt werden kann,
**dadurch gekennzeichnet, dass** die Schlitzvorrichtung (1) einen Betätigungsschieber (5) aufweist, der einen zu drückenden Bereich (5c), der an einem Teil im Inneren des Aufnahmebereichs (3b) angeordnet ist, sowie einen Betätigungsbereich (5a) besitzt, der sich von dem zu drückenden Bereich (5c) weg erstreckt und zur Außenseite des beweglichen Halters (3) vorsteht; und wobei sich der Betätigungsschieber (5) relativ zu dem beweglichen Halter (3) in einer Richtung zum Vergrößern oder Verkleinern des Vorstehausmaßes des Betätigungsbereichs (5a) in der Betätigungsrichtung bewegen kann und der Betätigungsbereich (5a) den Detektionsschalter (6) zum Einschalten veranlasst, indem der zu drückende Bereich (5c) von der mobilen Einheit (10) mit Druck beaufschlagt wird.

2. Schlitzvorrichtung (1) nach Anspruch 1,
wobei sich der Betätigungsschieber (5) relativ zu dem beweglichen Halter (3) in der Einsetzrichtung der mobilen Einheit (10) bewegen kann.

3. Schlitzvorrichtung (1) nach Anspruch 1 oder 2,
wobei der Betätigungsschieber (5) von dem beweglichen Halter (3) beweglich abgestützt ist.

4. Schlitzvorrichtung nach Anspruch 3,
wobei der Betätigungsschieber (5) von dem beweglichen Halter (3) über das Federelement elastisch abgestützt ist.

## Revendications

1. Dispositif à fente (1) pour système d'authentification d'antidémarrage, comprenant : un support mobile (3) comportant une partie de stockage (3b) dans laquelle une unité mobile (10) ayant une fonction de communication sans fil peut être insérée de façon amovible et est apte à se déplacer de façon glissante dans la direction d'insertion de l'unité mobile ; un ressort de rappel pour faire revenir le support mobile à une position initiale ; un interrupteur de détection (6) pour réaliser une opération d'authentification afin de faire générer par l'unité mobile (10) un signal de transpondeur par induction électromagnétique ; et un mécanisme de verrouillage capable de saisir le support mobile (3) en une position de glissement prédéterminée ; et en pressant l'unité mobile (10) insérée dans la partie de stockage (3b) et tenue par le support mobile (3) dans la direction d'insertion contre une force de pression du ressort de rappel, le support mobile (3) se déplace de façon glissante dans la même direction et, à un moment où l'unité mobile (10) est poussée dans une position prédéterminée, l'interrupteur de détection (6) est activé, de sorte que l'opération d'authentification peut être réalisée sur la base du signal de transpondeur, **caractérisé en ce que** :
le dispositif à fente (1) comprend un curseur d'actionnement (5) comportant une partie à presser (5c) qui est placée au niveau d'une partie située à l'intérieur de la partie de stockage (3b) et une partie d'actionnement (5a) qui s'étend depuis la partie à presser (5c) et qui fait saillie à l'extérieur du curseur mobile (3) ; et
dans lequel le curseur d'actionnement (5) peut se déplacer par rapport au support mobile (3) dans une direction pour augmenter ou diminuer la distance de saillie dans la partie d'actionnement (5a), et la partie d'actionnement (5a) active l'interrupteur de détection (6) en faisant presser la partie à presser (5c) par l'unité mobile (10).

2. Dispositif à fente (1) selon la revendication 1, dans lequel le curseur d'actionnement (5) est apte à se déplacer par rapport au support mobile (3) dans la direction d'insertion de l'unité mobile.

3. Dispositif à fente (1) selon la revendication 1 ou 2, dans lequel le curseur d'actionnement (5) est supporté de façon mobile par le support mobile (3).

4. Dispositif à fente (1) selon la revendication 3, dans lequel le curseur d'actionnement (5) est supporté de façon élastique par le support mobile (3) par l'intermédiaire de l'élément formant ressort.
